# FASCICULE DE BREVET EUROPEEN

(11) **EP 3 816 808 B1**
(45) Date de publication et mention de la délivrance du brevet: **28.09.2022**
(21) Numéro de dépôt: 20202029.3
(22) Date de dépôt: 15.10.2020
(51) Int. Cl.: G06F 13/42, H04L 12/413, H04L 12/40

(54) **PROCÉDÉ D'ACQUITTEMENT DE COMMUNICATION PAR BUS**
VERFAHREN ZUR KOMMUNIKATIONSBESTÄTIGUNG DURCH BUS
METHOD FOR ACKNOWLEDGEMENT OF COMMUNICATION BY BUS

(30) Priorité: 28.10.2019 FR 1912046
(43) Date de publication de la demande: 05.05.2021
(73) Titulaire: STMICROELECTRONICS (GRENOBLE 2) SAS, 38000 Grenoble (FR)
(72) Inventeur: DEHAMEL, Arnaud, 38650 MONESTIER DE CLERMONT (FR)
(74) Mandataire: Cabinet Beaumont

(56) Documents cités:
- DE-A1-102012 219 940

## Description

### Domaine technique

La présente description concerne de façon générale les dispositifs électroniques, et en particulier un dispositif destiné à être relié à un bus série.

### Technique antérieure

Certaines applications, notamment dans l'automobile, comprennent de nombreux dispositifs, tels que des calculateurs, des capteurs, etc., reliés entre eux par un bus série tel qu'un bus de type réseau de zone de commande, CAN (en anglais "Controller Area Network"). Les dispositifs communiquent entre eux par le bus CAN. Par rapport à d'autres liaisons de communication, la liaison par bus CAN permet de réduire le nombre des câbles utilisés. Le document DE-10-2012-219-940 décrit un procédé comprenant des étapes consistant à : recevoir au moins une trame comprenant des bits consécutifs ; débuter un envoi d'un accusé de réception avant la fin de la période d'arrivée.

### Résumé de l'invention

Il existe un besoin, dans les systèmes connus comprenant un bus série usuel tel qu'un bus CAN, d'accélérer le fonctionnement et/ou d'augmenter la longueur du bus série, et/ou d'augmenter la fiabilité de fonctionnement face à des parasites affectant le bus série.

Un mode de réalisation pallie tout ou partie des inconvénients des procédés connus de communication par bus série.

Un mode de réalisation pallie tout ou partie des inconvénients des dispositifs connus destinés à être reliés à un bus série.

Un mode de réalisation pallie tout ou partie des inconvénients des systèmes connus comprenant des dispositifs reliés à un bus série.

Un mode de réalisation prévoit un procédé comprenant des étapes consistant à :
recevoir au moins une trame comprenant des bits consécutifs transportés par un bus série ;
estimer une période d'arrivée d'un dernier desdits bits consécutifs ; et
débuter un envoi d'un accusé de réception avant la fin de la période d'arrivée estimée.

Selon un mode de réalisation, lesdits bits consécutifs ont une même durée de bit.

Selon un mode de réalisation, la période d'arrivée estimée se termine à un multiple de la durée de bit après une réception d'un front.

Selon un mode de réalisation, l'accusé de réception a une durée supérieure ou égale à la durée de bit, de préférence égale à la durée de bit.

Selon un mode de réalisation, le procédé comprend une étape consistant à terminer l'envoi de l'accusé de réception avant la fin d'une autre période ayant la durée de bit et débutant à la fin de ladite période d'arrivée, l'envoi de l'accusé de réception ayant de préférence une durée égale à la durée de bit.

Selon un mode de réalisation, l'envoi de l'accusé de réception est effectué au moins jusqu'à un point d'échantillonnage de l'accusé de réception.

Selon un mode de réalisation, l'envoi de l'accusé de réception débute à la fin d'un délai après un point d'échantillonnage dudit dernier desdits bits consécutifs.

Selon un mode de réalisation, ledit délai dure moins de trois, de préférence un seul, temps de cycle d'une horloge.

Un mode de réalisation prévoit un dispositif configuré pour mettre en oeuvre un procédé tel que défini ci-dessus.

Selon un mode de réalisation, le dispositif est configuré en outre pour lire une valeur dudit dernier desdits bits consécutifs audit point d'échantillonnage dudit dernier desdits bits consécutifs.

Selon un mode de réalisation, ledit délai est programmable.

Selon un mode de réalisation, le dispositif comprend ladite horloge.

Un mode de réalisation prévoit un système comprenant un bus série, de préférence de type CAN, et un ou plusieurs premiers dispositifs tels que définis ci-dessus reliés au bus série.

Selon un mode de réalisation, ledit délai est commun pour les premiers dispositifs.

Selon un mode de réalisation, le système comprend, relié au bus série, un deuxième dispositif configuré pour envoyer :
des premiers messages véhiculant un ensemble d'étapes à effectuer par les premiers dispositifs ; et
des deuxièmes messages adressés à une partie des premiers dispositifs, les deuxièmes messages véhiculant des identifiants respectifs des premiers dispositifs auxquels les deuxièmes messages sont adressés, les deuxièmes messages demandant aux premiers dispositifs auxquels les deuxièmes messages sont adressés d'envoyer des réactions respectives au deuxième dispositif dans des intervalles de temps attendus respectifs,
les premiers dispositifs étant configurés pour :
   recevoir les premiers messages, lire l'ensemble d'étapes à effectuer, et mettre en oeuvre des étapes en fonction de l'ensemble lu ; et
   recevoir les deuxièmes messages, et réagir au deuxièmes messages par l'envoi sur le bus série, dans les intervalles de temps attendus respectifs, de réactions à destination du deuxième dispositif.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, de manière schématique, un système comprenant un bus série et des dispositifs reliés au bus, du type auquel s'appliquent des modes de réalisation décrits ; et

la figure 2 représente des chronogrammes illustrant un mode de réalisation d'un procédé de communication dans un système du type de celui de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, des parties de circuits de dispositifs destinés à être reliés à un bus série, en particulier des unités de transmission et de réception (en anglais "transceiver unit"), ne sont pas décrits en détail et/ou ne sont pas représentés. En effet, les modes de réalisation sont compatibles avec les dispositifs usuels destinés à être reliés à un bus série, cette compatibilité pouvant en particulier être obtenue en configurant, d'une manière accessible par l'homme du métier, ces dispositifs pour mettre en oeuvre les modes de réalisation des procédés décrits ci-après.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

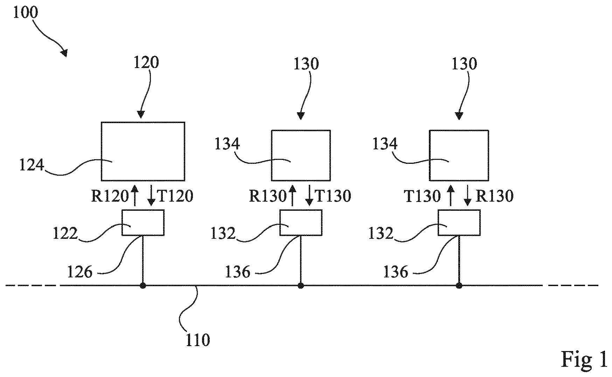

La figure 1 représente, de manière schématique, un système 100, comprenant un bus série 110, un dispositif 120 et plusieurs dispositifs 130. Les modes de réalisation décrits s'appliquent à un système du type du système 100. Deux dispositifs 130 sont représenté à titre d'exemple, mais le système 100 peut comprendre un ou plusieurs dispositifs 130.

Le bus série 110 est typiquement défini par deux fils conducteurs. De préférence, le bus 110 est de type CAN, typiquement défini par la norme ISO 11898. Plus préférentiellement, le bus CAN est de type CAN à débit de données flexible FD CAN ("Flexible Data rate CAN").

Les dispositifs 120, 130 sont reliés, de préférence connectés, au bus 110. En fonctionnement, les dispositifs 120 et 130 communiquent des données entre eux par le bus 110. Pour cela, les dispositifs envoient et/ou reçoivent des données transportées par le bus 110. Pour transmettre des données, chaque dispositif envoie une ou plusieurs trames. Par trame, on entend une succession de bits disposés selon un ordre prédéfini. Chaque trame comprend au moins un bit de début de trame et plusieurs bits de fin de trame. Les bits des données (ou informations) transmises entre dispositifs sont constitués par certains des bits de la trame. Chaque bit correspond à un niveau logique du bus 110 pendant une durée TBIT (non représentée en figure 1). Par niveaux logiques, on entend deux niveaux de potentiel du bus 110, préférentiellement correspondant à des états respectifs récessif et dominant du bus CAN 110. La durée TBIT est, de préférence, commune aux bits de la trame. La durée TBIT est typiquement comprise entre environ 0,1 et 2 µs, par exemple égale à 1 µs, ce qui correspond à un débit de données inférieur à environ 10 Mbits/s, par exemple égal à 1 Mbits/s.

De préférence, le procédé de communication mis en oeuvre par le système 100 est orchestré par le dispositif 120, appelé dispositif maître. Les dispositifs 130 sont alors appelés dispositifs esclaves. En particulier, chaque dispositif esclave 130 envoie des données sur le bus 110 seulement après avoir reçu d'autres données, envoyées par le dispositif maître 120, lui indiquant qu'il peut, ou doit, envoyer des données. De préférence, chaque dispositif esclave 130 envoie ses données seulement dans un intervalle de temps indiqué par le dispositif maître 120. Le dispositif maître 120 fait en sorte qu'un seul des dispositifs 120, 130 à la fois envoie des données sur le bus. Ainsi, les priorités de transmission sont gérées seulement par le dispositif maître 120.

De préférence, les dispositifs 120, 130 mettent en oeuvre un procédé tel que décrit dans la demande de brevet italien numéro 102018000003980 (17-GRA-0844), déposée le 26 mars 2018. Un tel procédé de communication comprend l'envoi par le dispositif maître 120 :
- de premiers messages véhiculant un ensemble d'étapes à effectuer par les dispositifs esclaves 130 ; et
- de deuxièmes messages adressés à une partie des dispositifs esclaves 130, ces deuxièmes messages véhiculant des identifiants respectifs des dispositifs esclaves 130 auxquels les deuxièmes messages sont adressés. Les deuxièmes messages demandent aux dispositifs esclaves 130 auxquels ils sont adressés d'envoyer des réactions respectives au dispositif maître 120 dans des intervalles de temps attendus respectifs. Ce procédé de communication comprend en outre la mise en oeuvre par les dispositifs esclaves 130 de :
- la réception des premiers messages, la lecture de l'ensemble d'étapes à effectuer, et la mise en oeuvre d'étapes en fonction de l'ensemble lu ; et
- la réception des deuxièmes messages, et la réaction aux deuxièmes messages par l'envoi sur le bus, dans les intervalles de temps attendus respectifs, de réactions à destination du dispositif maître 120.

Chaque dispositif 120, 130 comprend typiquement une unité, respectivement 122, 132, de transmission et de réception de données, et un circuit, respectivement 124, 134. Plus précisément, l'unité de transmission et de réception 122, 132 relie le circuit respectif 124, 134 au bus 110. De préférence, l'unité de transmission et de réception 122, 132 est connectée au circuit respectif 124, 134 et au bus 110, c'est-à-dire que l'unité 122, 132 connecte le circuit respectif 124, 134 au bus 110. Plus particulièrement, l'unité 122, 132 a une entrée/sortie, respectivement 126, 136, connectée au bus 110. Chaque entrée/sortie 126, 136 comprend typiquement deux noeuds connectés respectivement à deux fils constituant le bus 110. En fonctionnement, pour envoyer des données, le circuit 124, 134 envoie un signal, respectivement T120, T130, véhiculant les niveaux logiques à appliquer au bus 110. L'unité de transmission et de réception 122, 132 fournit au circuit 124, 134 un signal, respectivement R120, R130, véhiculant les niveaux logiques du bus 110, par exemple le signal R120, R130 est à un niveau haut pour un état récessif du bus et à un niveau bas pour un état dominant du bus. Ainsi, le circuit 124, 134 reçoit les données véhiculées par le bus 110.

Les circuits 124 et 134 peuvent correspondre à tout circuit usuel utilisant des données transmises par un bus série et/ou fournissant des données à transmettre par un bus série. Le circuit 124, 134 est typiquement, en outre, configuré pour effectuer un traitement logique et/ou numérique des données. Le ou les circuits 134 peuvent comprendre un ou plusieurs capteurs et/ou actionneurs, non représentés. Dans un exemple préféré, un ou plusieurs des circuits 134 sont reliés, de préférence connectés, à des diodes électroluminescentes de feux à LED d'un véhicule, et permettent de commander divers effets visuels des feux à LED. Chaque circuit 134 peut comprendre un circuit de traitement séquentiel des données, tel qu'un microprocesseur.

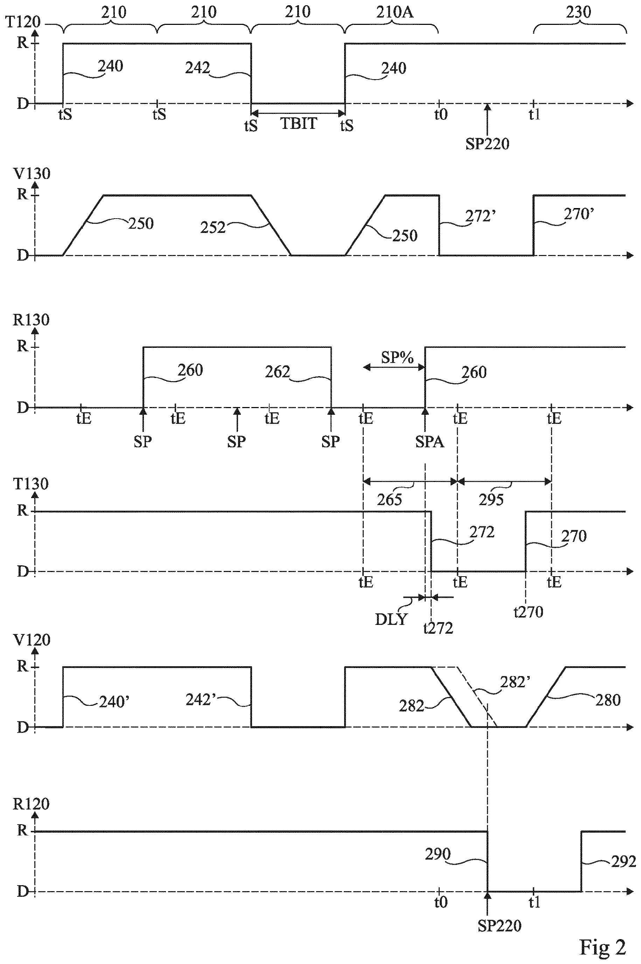

La figure 2 représente des chronogrammes illustrant un mode de réalisation d'un procédé de communication dans un système du type du système 100 de la figure 1. Plus précisément, on a représenté, de manière très schématique, des allures en fonction du temps t :
- du signal T120 du dispositif 120, à appliquer sur le bus 110 par l'unité 122 ;
- d'un niveau V130 de l'entrée/sortie 136 de l'un des dispositifs 130, ce niveau correspondant par exemple au potentiel de l'un des noeuds de l'entrée/sortie 126 ;
- du signal R130 du dispositif 130, fourni par l'unité 132 au circuit 134 ;
- du signal T130 du dispositif 130, à appliquer sur le bus 110 par l'unité 132 ;
- d'un niveau V120 de l'entrée/sortie 126 du dispositifs 120, ce niveau correspondant par exemple au potentiel de l'un des noeuds de l'entrée/sortie 126 ; et
- du signal R120 du dispositif 120, fourni par l'unité 122 au circuit 124.

Les signaux et niveaux évoluent entre des valeurs correspondant à deux niveaux du bus 110, de préférence aux états dominant (D) et récessif (R) du bus CAN 110. Les signaux et niveaux sont représentés pendant une partie d'une trame envoyée par le dispositif 120 et reçue par le dispositif 130. Le procédé est illustré ci-après dans l'exemple où le dispositif 120 est maître et le dispositif 130 est esclave, mais ceci n'est pas limitatif, les modes de réalisation décrits étant compatibles avec tout procédé d'émission et réception d'un trame véhiculée par un bus série, de préférence un bus CAN.

Le dispositif maître 120 envoie consécutivement des bits 210, 210A jusqu'à un instant t0. Le bit 210A se termine à l'instant t0. Par consécutivement, on entend que le niveau du signal T120 à appliquer sur le bus 110 ne change pas entre deux bits consécutifs de même valeur et que le passage entre bits consécutifs de valeurs différentes correspond à un front montant 240 ou descendant 242. Les bits consécutifs sont délimités par des instants tS, autrement dit, chaque instant tS est situé à la fin de l'envoi d'un bit et au début de l'envoi du bit suivant. Les fronts montants 240 correspondent ici au passage de l'état dominant à l'état récessif, et les fronts descendants 242 correspondent ici au passage de l'état récessif à l'état dominant. Le bit 210A est de préférence à l'état récessif. Pour les bits à l'état dominant, l'application du signal T120 consiste à mettre le bus 110 à un niveau bas. Pour les bits à l'état récessif, l'application du signal T120 consiste à laisser le bus 110 à un niveau haut. A titre d'exemple, le signal R120 de réception par le dispositif maître 120 reste à l'état récessif pendant l'envoi des bits 210 et 210A.

De référence, les bits ont des durées prédéfinies, ce qui permet de distinguer entre eux des bits consécutifs de même niveau. Plus préférentiellement, les bits de la trame ont la même durée de bit TBIT, typiquement définie par la norme mentionnée ci-dessus pour le bus CAN. Les instants tS sont alors répétés régulièrement.

De préférence, les bits de la trame sont dans l'ordre prédéfini par la norme mentionnée ci-dessus pour le bus CAN. Ainsi, les bits consécutifs 210, 210A comprennent préférentiellement des bits de données et d'éventuels bits de transparence (en anglais "stuffing bits"). En outre, l'ensemble des bits consécutifs se termine typiquement par des bits de détection d'erreur, par exemple de type Contrôle de Redondance Cyclique, CRC (en anglais "Cyclic Redundancy Check"), suivis d'un bit de délimitation (le bit 210A) qui se termine à l'instant t0.

A partir de l'instant t0, jusqu'à un instant t1, le dispositif maître 120 n'envoie plus de bits, mais s'attend à recevoir un accusé de réception transmis par le bus 110. Autrement dit, le bit 210A est le dernier des bits consécutifs. Plus précisément, entre les instants t0 et t1, à un point d'échantillonnage SP220 (en anglais "sampling point"), c'est-à-dire un instant de lecture de l'état du bus 110, le dispositif maître 120 détermine si l'état du bus 110 correspond au résultat d'un envoi d'un accusé de réception par le ou au moins l'un des dispositifs esclaves 130. Pour cela, de préférence, le dispositif maître 120 laisse le bus 110 à l'état récessif et reçoit l'accusé de réception si, à au point d'échantillonnage SP220, le bus 110 est mis à l'état dominant par le ou au moins l'un des dispositifs esclaves 130. La période allant de l'instant t0 à l'instant t1 a de préférence une durée égale à la durée de bit TBIT.

De préférence, après l'instant t1, le dispositif maître 120 envoie à nouveau des bits 230, typiquement un bit de délimitation d'accusé de réception et des bits de fin de trame.

Les fronts montants 240 et descendants 242 du signal T120 avant application sur le bus 110 se traduisent, à leur arrivée à l'entrée/sortie 136, par des fronts respectifs montants 250 et descendants 252 du signal V130. Les fronts 250 et 252 délimitent ainsi des périodes d'arrivée à l'entrée/sortie 136 des bits envoyés par le dispositif maître 120.

A des points d'échantillonnage SP, SPA, l'unité 132 lit la valeur des bits respectifs 210, 210A qui arrivent sur l'entrée/sortie 136. A chaque point d'échantillonnage SP, SPA, l'unité 132 mémorise la valeur lue. Pour chaque point d'échantillonnage SP, SPA, le signal R130 fourni par l'unité 132 prend la valeur mémorisée à ce point d'échantillonnage jusqu'au point d'échantillonnage suivant. Ainsi, après chaque front montant 240 ou descendant 242 du signal T120, le signal R130 présente un front respectivement montant 260 ou descendant 262. Dans l'exemple représenté, la lecture du bit 210A correspond à un des fronts montants 260 du signal R130. Le signal R130 véhicule ainsi vers le circuit 134 les bits en provenance de l'unité 132. On a donc obtenu une communication entre les dispositifs 120 et 130.

L'unité 132 utilise les fronts 250 et/ou 252 pour définir les points d'échantillonnage SP d'une manière synchronisée par rapport aux périodes d'arrivée des bits sur l'entrée/sortie 136. Pour cela, l'unité 132 reçoit les fronts utilisés pour la synchronisation, de préférence les fronts descendants 252. La synchronisation est effectuée à partir des instants de réception des fronts.

La synchronisation consiste, pour l'unité 132, à estimer, c'est-à-dire déterminer ou évaluer, des instants tE délimitant les périodes d'arrivée des bits sur l'entrée/sortie 136. La période d'arrivée de chaque bit débute et se termine, à une précision près, à un instant tE. Autrement dit, les instants tE délimitent des périodes d'arrivée estimées des bits sur l'entrée/sortie 136, correspondant aux périodes d'arrivée des bits à la précision près de l'évaluation des instants tE.

L'unité de traitement évalue les instants tE de sorte que :
- les instants tE sont répétés régulièrement avec un pas de temps égal à la durée de bit TBIT, ou sensiblement égal à la durée TBIT à une précision près d'une horloge comprise dans le dispositif esclave 130 ; et
- ceux des instants tE pour lesquels les bits sont séparés par un front utilisé pour la synchronisation coïncident, ou coïncident sensiblement, avec la réception de ce front.

Dit encore autrement, les instants tE se situent à la réception d'un front et/ou à un nombre entier, ou sensiblement entier, de fois la durée TBIT après la réception d'un front. De préférence, l'unité 132 comprend un circuit, non représenté, de détection de l'arrivée des fronts utilisés pour la synchronisation, et la réception d'un front est alors définie par un instant où un signal interne à l'unité 132 passe à un niveau correspondant à un front détecté. Les modes de réalisation décrits sont compatibles avec les manières usuelles de synchroniser la réception des bits avec l'arrivée des bits, c'est dire d'obtenir les instants estimés tE.

Dans la période d'arrivée estimée de chaque bit, c'est-à-dire entre l'instant tE estimé de début de la période d'arrivée du bit et l'instant tE estimé de fin de la période d'arrivée du bit, le point d'échantillonnage est l'instant où une portion prédéfinie SP% de la durée de bit TBIT s'est écoulée depuis l'instant tE estimé de début de la période d'arrivée du bit. A titre d'exemple, la portion prédéfinie SP% représente entre 50% et 80% de la durée de bit TBIT, de préférence environ 70% de la durée de bit TBIT.

Le dispositif esclave 130 envoie un accusé de réception, dans l'exemple représenté, en mettant le signal T130 à appliquer sur le bus 110 à l'état dominant. De préférence, le signal T130 reste à l'état récessif au cours de la réception des bits 210, 210A tant que le dernier bit 210A n'a pas été lu, c'est-à-dire au moins jusqu'au point d'échantillonnage SPA. L'accusé de réception est donc envoyé, de préférence, après le point d'échantillonnage SPA.

On propose ici que l'envoi de l'accusé de réception débute avant la fin de la période d'arrivée estimée 265 du bit 210A. L'envoi de l'accusé de réception débute à un instant t272 où le signal T130 présente un front descendant 272. Ainsi, l'instant t272 précède l'instant tE estimé de fin de la période d'arrivée du dernier bit 210A. L'accusé de réception est, de préférence, envoyé jusqu'à un instant t270, et le signal T130 présente à cet t270 instant un front montant 270. Dans l'exemple représenté, entre les instants de début t272 et de fin t270 de l'accusé de réception, l'unité 132 met le bus 110 à l'état dominant. A titre d'exemple, le signal R130 de réception par le dispositif esclave 130 reste à l'état récessif pendant l'envoi de l'accusé de réception.

Les fronts descendant 272 et montant 270 du signal T130 se traduisent, à leurs arrivées à l'entrée/sortie 126 du dispositif maître 120, par des fronts respectifs descendant 282 et montant 280 du signal V120. L'accusé de réception est reçu par le dispositif 120 au point d'échantillonnage SP220 (état dominant entre des fronts 290 et 292 du signal R120).

En pratique, au cours de l'acheminement des bits 210 et 210A du dispositif maître 120 au dispositif esclave 130, l'arrivée des fronts 250 et 252 à l'entrée/sortie 136 est postérieure aux fronts 240 et 242 du signal T120. Autrement dit, il y un retard entre l'envoi des bits par le dispositif maître 120 et leur arrivée à l'entrée/sortie 136. En outre, les fronts 250 et 252 à leur arrivée à l'entrée/sortie 136 ne sont pas aussi abrupts que les fronts 240 et 242 du signal T120. Autrement dit, le changement de niveau V130 au cours d'un front 250, 252 prend plus de temps que le changement de niveau du signal T120 à appliquer. Le changement de niveau V130 au cours des fronts 250 et 252 peut en outre présenter un aspect bruité, non représenté, par exemple des oscillations avant stabilisation au niveau de fin de front.

De même, en pratique, au cours de l'acheminement de l'accusé de réception du dispositif esclave 130 au dispositif maître 120, l'arrivée des fronts 282 et 280 est postérieure aux fronts 272 et 270. Autrement dit, il y un retard entre l'envoi de l'accusé de réception par le dispositif maître 120 et son arrivée à l'entrée/sortie 126. En outre, les fronts 282 et 280 à leur arrivée à l'entrée/sortie 136 ne sont pas aussi abrupts que les fronts 272 et 270 du signal T130. Le changement de niveau V120 au cours des fronts 282 et 280 peut également présenter un aspect bruité, non représenté.

Ces retards et ces aspects bruités sont dus à divers phénomènes tels qu'une atténuation et des parasites, qui se produisent au cours de la propagation sur le bus 110 de l'entrée/sortie 126 à l'entrée/sortie 136 et de l'entrée/sortie 136 à l'entrée/sortie 126. Plus le bus 110 est long et soumis à des parasites, plus les retards sont élevés et les aspects bruités sont importants.

En outre, au cours de l'envoi des bits 210 et 210A, les fronts 240 et 242 du signal T120 se traduisent par des fronts 240' et 242' du niveau V120 de l'entrée/sortie 126 pouvant présenter en pratique, par rapport aux fronts 240 et 242, un aspect bruité et un retard, non représentés, qui s'ajoutent à ceux produits par la propagation sur le bus 110. De même, au cours de l'envoi de l'accusé de réception, les fronts 272 et 270 du signal T130 se traduisent par des fronts 272' et 270' du niveau V130 de l'entrée/sortie 136 pouvant présenter en pratique, par rapport aux fronts 272 et 270, un aspect bruité et un retard, non représentés, qui s'ajoutent à ceux produits par la propagation sur le bus 110.

Du fait du retard et de l'aspect bruité des fronts 250, un retard apparaît, en pratique, entre les instants tS délimitant les bits 210 émis par le dispositif maître 120, et les instants tE délimitant les périodes estimées d'arrivée des bits sur l'entrée/sortie 136 du dispositif esclave 130.

On aurait pu penser envoyer l'accusé de réception seulement quand le bit 210A a fini d'arriver. Par exemple, on aurait pu, afin de synchroniser l'accusé de réception avec les bits de la trame, penser envoyer l'accusé de réception à l'instant tE où on estime que se produit la fin de l'arrivée du bit 210A. On aurait alors risqué que le front (pointillés 282') de début d'accusé de réception ne soit pas terminé au point d'échantillonnage SP220 de l'accusé de réception par le dispositif maître 120. En comparaison, le fait de prévoir de commencer à envoyer l'accusé de réception avant la fin de la période 265 d'arrivée estimée du bit 210A, permet de réduire le risque, pour une longueur donnée du bus 110 et un niveau de parasites donné, que le point d'échantillonnage ne soit pas situé après la fin du front 282. On réduit ainsi le risque que l'accusé de réception ne soit pas reçu correctement par le dispositif maître 120. Autrement dit, on a, à longueur donnée, augmenté le niveau de fiabilité de la communication par le bus 110. De la même manière, on peut, à niveau de fiabilité donné, augmenter la longueur du bus 110, ce qui correspond à une augmentation des retards susmentionnés. On peut aussi, à niveau de fiabilité donné, conserver les retards constants en conservant la longueur, mais augmenter la fréquence de fonctionnement du bus 110 (autrement dit, réduire la durée TBIT). Ainsi, le fait de prévoir le début d'envoi de l'accusé de réception avant la fin de la période 265, permet d'accélérer le fonctionnement et/ou d'augmenter la longueur du bus 110, et/ou d'augmenter la fiabilité de fonctionnement face à des parasites affectant le bus 110.

De préférence, l'instant t270 de fin d'envoi de l'accusé de réception est situé avant la fin d'une période 295 ayant la durée TBIT suivant la période 265 d'arrivée estimée du bit 210A. Ceci permet d'assurer que l'envoi de l'accusé de réception par le dispositif esclave 130 ne perturbe pas l'envoi, par le dispositif maître 120, des bits 230 de la trame situés après l'accusé de réception. Plus préférentiellement, la durée de l'envoi de l'accusé de réception est égale à la durée de bit, ou sensiblement égale à la durée de bit à une précision de temps de cycle d'horloge près.

De préférence, l'envoi de l'accusé de réception est effectué au moins jusqu'au point d'échantillonnage SP220 de l'accusé de réception. Autrement dit, l'instant t270 est postérieur au point d'échantillonnage SP220. Ceci permet d'assurer que le niveau du bus 110 est toujours le niveau d'envoi de l'accusé de réception au moment où l'accusé de réception est lu par le dispositif maître 120.

Du fait que l'accusé de réception soit envoyé après le point d'échantillonnage SPA du bit 210A, permet au dispositif esclave 130 de vérifier que tous les bits consécutifs 210, 210A précédent l'accusé de réception ont bien été reçus avant l'envoi de l'accusé de réception. Plus préférentiellement, dans le cas où le dispositif esclave 130 comprend une horloge et une unité de traitement séquentiel de données cadencée par l'horloge, on prévoit un délai DLY d'au moins un temps de cycle d'une horloge interne au dispositif esclave 130 entre le point d'échantillonnage SPA et l'instant t272 de début d'envoi de l'accusé de réception.

De préférence, le délai DLY entre le point d'échantillonnage SPA et l'instant t272 est inférieur à trois temps de cycles d'horloge, plus préférentiellement égal à un cycle d'horloge. Par rapport un délai plus long, ceci permet d'augmenter le temps entre l'instant t272 de début d'envoi de l'accusé de réception et la fin de la période 265 d'arrivée estimée du bit 210A, et ainsi, comme mentionné ci-dessus, d'augmenter la fiabilité et/ou la longueur du bus et/ou la fréquence. Pour cela, de préférence, toutes les opérations de vérification, par exemple la vérification du CRC, sont effectuées avant le point d'échantillonnage SPA, de sorte que, une fois le bit 210A reçu, seule une opération de vérification de la valeur du bit 210A reçu reste à effectuer avant d'envoyer l'accusé de réception.

De préférence, le dispositif esclave 130 est configuré pour, par exemple programmé pour, que le délai DLY entre le point d'échantillonnage SPA et l'instant t272 de début d'envoi de l'accusé de réception soit programmable, de préférence sélectionnable parmi des multiples du temps de cycle d'horloge. La sélection est effectuée par exemple en fournissant une valeur à un programme. Ceci permet d'adapter le dispositif esclave 130 à diverses longueurs du bus 110 et/ou à diverses fréquences de fonctionnement du bus 110 et/ou à divers niveaux de parasites subis par le bus 110.

Le système mettant en oeuvre le procédé décrit ci-dessus en relation avec la figure 2 comprend de préférence plusieurs dispositifs esclaves 130. Dans ce cas, plus préférentiellement, le délai DLY dans chaque dispositif esclave 130 entre le point d'échantillonnage SPA et l'instant t272 de début d'envoi a la même durée pour tous les dispositifs esclaves 130. Ceci permet d'optimiser la réception de l'accusé de réception par le dispositif maître 120.

## Revendications

1. Procédé comprenant des étapes consistant à :
- recevoir au moins une trame comprenant des bits consécutifs (210, 210A) transportés par un bus série (110) ;
- estimer une période d'arrivée d'un dernier desdits bits consécutifs (210A) ; et
- débuter un envoi d'un accusé de réception avant la fin de la période d'arrivée estimée (265).

2. Procédé selon la revendication 1, dans lequel lesdits bits consécutifs (210, 210A) ont une même durée de bit (TBIT).

3. Procédé selon la revendication 2, dans lequel la période d'arrivée estimée (265) se termine à un multiple de la durée de bit (TBIT) après une réception d'un front (252).

4. Procédé selon la revendication 2 ou 3, dans lequel l'accusé de réception a une durée supérieure ou égale à la durée de bit (TBIT), de préférence égale à la durée de bit.

5. Procédé selon l'une quelconque des revendications 2 à 4, comprenant une étape consistant à terminer l'envoi de l'accusé de réception avant la fin d'une autre période (295) ayant la durée de bit et débutant à la fin de ladite période d'arrivée (265), l'envoi de l'accusé de réception ayant de préférence une durée égale à la durée de bit (TBIT) .

6. Procédé selon l'une quelconque des revendications 1 à 5, dans lequel l'envoi de l'accusé de réception est effectué au moins jusqu'à un point d'échantillonnage (SP220) de l'accusé de réception.

7. Procédé selon l'une quelconque des revendications 1 à 6, dans lequel l'envoi de l'accusé de réception débute à la fin d'un délai (DLY) après un point d'échantillonnage (SPA) dudit dernier desdits bits consécutifs (210A).

8. Procédé selon la revendication 7, dans lequel ledit délai (DLY) dure moins de trois, de préférence un seul, temps de cycle d'une horloge.

9. Dispositif (130) configuré pour mettre en oeuvre un procédé selon l'une quelconque des revendications 1 à 8.

10. Dispositif (130) selon la revendication 9 dans sa dépendance à la revendication 7, configuré en outre pour lire une valeur dudit dernier desdits bits consécutifs (210A) audit point d'échantillonnage (SPA) dudit dernier desdits bits consécutifs (210A).

11. Dispositif (130) selon la revendication 10, dans lequel ledit délai (DLY) est programmable.

12. Dispositif (130) selon l'une quelconque des revendications 9 à 11 dans sa dépendance à la revendication 8, comprenant ladite horloge.

13. Système (100) comprenant un bus série (110), de préférence de type CAN, et un ou plusieurs premiers dispositifs (130) selon l'une quelconque des revendications 9 à 12 reliés au bus série.

14. Système selon la revendication 13 dans sa dépendance à la revendication 7, dans lequel ledit délai (DLY) est commun pour les premiers dispositifs (130).

15. Système selon la revendication 13 ou 14, comprenant, relié au bus série (110), un deuxième dispositif (120) configuré pour envoyer :
- des premiers messages véhiculant un ensemble d'étapes à effectuer par les premiers dispositifs (130) ; et
- des deuxièmes messages adressés à une partie des premiers dispositifs (130), les deuxièmes messages véhiculant des identifiants respectifs des premiers dispositifs (130) auxquels les deuxièmes messages sont adressés, les deuxièmes messages demandant aux premiers dispositifs (130) auxquels les deuxièmes messages sont adressés d'envoyer des réactions respectives au deuxième dispositif (120) dans des intervalles de temps attendus respectifs,
les premiers dispositifs (130) étant configurés pour :
- recevoir les premiers messages, lire l'ensemble d'étapes à effectuer, et mettre en oeuvre des étapes en fonction de l'ensemble lu ; et
- recevoir les deuxièmes messages, et réagir au deuxièmes messages par l'envoi sur le bus série (110), dans les intervalles de temps attendus respectifs, de réactions à destination du deuxième dispositif (120).

## Patentansprüche

1. Ein Verfahren, das die folgenden Schritte aufweist:
- Empfangen wenigstens eines Rahmens, der durch einen seriellen Bus (110) transportierte aufeinanderfolgende Bits (210, 210A) aufweist,
- Schätzen einer Ankunftsperiode eines letzten Bits der aufeinanderfolgenden Bits (210A),
- Starten des Sendens einer Bestätigung des Empfangs vor dem Ende der geschätzten Ankunftsperiode (265).

2. Verfahren nach Anspruch 1, wobei die aufeinanderfolgenden Bits (210, 210A) die gleiche Bitdauer (TBIT) aufweisen.

3. Verfahren nach Anspruch 2, wobei die geschätzte Ankunftsperiode (265) bei einem Vielfachen der Bitdauer (TBIT) nach einem Empfang einer Flanke (252) endet.

4. Verfahren nach Anspruch 2 oder 3, wobei die Bestätigung des Empfangs eine Dauer, die größer oder gleich der Bitdauer (TBIT) und vorzugsweise gleich der Bitdauer ist, aufweist.

5. Verfahren nach einem der Ansprüche 2 bis 4, das einen Schritt zum Beenden des Sendens der Bestätigung des Empfangs vor dem Ende einer weiteren Periode (295), die die Bitdauer aufweist und am Ende der Ankunftsperiode (265) beginnt, aufweist, wobei das Senden der Bestätigung des Empfangs vorzugsweise eine Dauer gleich der Bitdauer (TBIT) aufweist.

6. Verfahren nach einem der Ansprüche 1 bis 5, wobei das Senden der Bestätigung des Empfangs wenigstens bis zu einem Abtastungspunkt (SP220) der Bestätigung des Empfangs ausgeführt wird.

7. Verfahren nach einem der Ansprüche 1 bis 6, wobei das Senden der Bestätigung des Empfangs am Ende einer Verzögerung (DLY) nach einem Abtastungspunkt (SPA) des letzten Bits der aufeinanderfolgenden Bits (210A) beginnt.

8. Verfahren nach Anspruch 7, wobei die Verzögerung (DLY) weniger als drei und vorzugsweise eine einzelne Zykluszeit eines Takts andauert.

9. Eine Vorrichtung (130), die konfiguriert ist zum Implementieren des Verfahrens gemäß den Ansprüchen 1 bis 8.

10. Vorrichtung (130) nach Anspruch 9 und in Abhängigkeit von Anspruch 7, die weiterhin konfiguriert ist zum Lesen eines Werts des letzten Bits der aufeinanderfolgenden Bits (210A) an dem Abtastungspunkt (SPA) des letzten Bits der aufeinanderfolgenden Bits (210A).

11. Vorrichtung (130) nach Anspruch 10, wobei die Verzögerung (DLY) programmierbar ist.

12. Vorrichtung (130) nach einem der Ansprüche 9 bis 11 und in Abhängigkeit von Anspruch 8, die einen Takt aufweist.

13. Ein System (100), das einen seriellen Bus (110), vorzugsweise des CAN-Typs, und eine oder mehrere erste Vorrichtungen (130) gemäß den Ansprüchen 9 bis 12, die mit dem seriellen Bus verbunden sind, aufweist.

14. System nach Anspruch 13 und in Abhängigkeit von Anspruch 7, wobei die Verzögerung (DLY) für die ersten Vorrichtungen (130) gleich ist.

15. System nach Anspruch 13 oder 14, das eine zweite Vorrichtung (120) aufweist, die mit dem seriellen Bus (110) gekoppelt ist und konfiguriert ist zum Senden von:
- ersten Nachrichten, die einen Satz von durch die ersten Vorrichtungen (130) auszuführenden Schritten übermitteln, und
- zweiten Nachrichten, die an einen Teil der ersten Vorrichtungen (130) adressiert sind, wobei die zweiten Nachrichten entsprechende Identifizierer der ersten Vorrichtungen (130), an die die zweiten Nachrichten adressiert sind, übermitteln und wobei die zweiten Nachrichten anfragen, dass die ersten Vorrichtungen (130), an die die zweiten Nachrichten adressiert sind, entsprechende Reaktionen an die zweite Vorrichtung (120) in entsprechenden erwarteten Zeitintervallen senden,
wobei die ersten Vorrichtungen (130) konfiguriert sind zum:
- Empfangen der ersten Nachrichten, Lesen des Satzes von auszuführenden Schritten und Implementieren von Schritten als einer Funktion des gelesenen Satzes, und
- Empfangen der zweiten Nachrichten und Reagieren auf die zweiten Nachrichten durch das Senden, auf dem seriellen Bus (110) und in den entsprechenden erwarteten Zeitintervallen, von für die zweite Vorrichtung (120) bestimmten Reaktionen.

## Claims

1. A method comprising the steps consisting in:
- receiving at least one frame comprising consecutive bits (210, 210A) transported by a serial bus (110);
- estimating an arrival period of a last bit of said consecutive bits (210A);
- starting a sending of an acknowledgement of receipt before the end of the estimated arrival period (265).

2. The method according to claim 1, wherein said consecutive bits (210, 210A) have a same bit duration (TBIT).

3. The method according to claim 2, wherein the estimated arrival period (265) ends at a multiple of the bit duration (TBIT) after a reception of an edge (252).

4. The method according to claim 2 or 3, wherein the acknowledgement of receipt has a duration greater than or equal to the bit duration (TBIT), preferably equal to the bit duration.

5. The method according to any one of claims 2 to 4, comprising a step consisting in ending the sending of the acknowledgement of receipt before the end of a further period (295) having the bit duration and starting at the end of said arrival period (265), the sending of the acknowledgement of receipt preferably having a duration equal to the bit duration (TBIT).

6. The method according to any one of claims 1 to 5, wherein the sending of the acknowledgement of receipt is carried out at least until a sampling point (SP220) of the acknowledgement of receipt.

7. The method according to any one of claims 1 to 6, wherein the sending of the acknowledgement of receipt starts at the end of a delay (DLY) after a sampling point (SPA) of said last bit of said consecutive bits (210A).

8. The method according to claim 7, wherein said delay (DLY) lasts less than three, preferably a single, cycle time of a clock.

9. A device (130) configured to implement the method according to any of claims 1 to 8.

10. The device (130) according to claim 9 with its dependence on claim 7, further configured to read a value of said last bit of said consecutive bits (210A) at said sampling point (SPA) of said last bit of said consecutive bits (210A).

11. The device (130) according to claim 10, wherein said delay (DLY) is programmable.

12. The device (130) according to any one of claims 9 to 11 with its dependence on claim 8, comprising said clock.

13. A system (100) comprising a serial bus (110), preferably of the CAN type, and one or more first devices (130) according to any one of claims 9 to 12 coupled to the serial bus.

14. The system according to claim 13 with its dependence on claim 7, wherein said delay (DLY) is common for the first devices (130).

15. The system according to claim 13 or 14, comprising, coupled to the serial bus (110), a second device (120) configured to send:
- first messages conveying a set of steps to be carried out by the first devices (130); and
- second messages addressed to a part of the first devices (130), the second messages conveying respective identifiers of the first devices (130) to which the second messages are addressed, the second messages requesting that the first devices (130) to which the second messages are addressed send respective reactions to the second device (120) in respective expected time intervals,
the first devices (130) being configured to:
- receive the first messages, read the set of steps to be carried out, and implement steps as a function of the read set; and
- receive the second messages, and react to the second messages by the sending on the serial bus (110), in the respective expected time intervals, of reactions destined for the second device (120).
